**Europäisches Patentamt**

**European Patent Office**

**Office européen des brevets**

(19)

(11) Veröffentlichungsnummer : **0 346 273 B1**

(12) # EUROPÄISCHE PATENTSCHRIFT

(45) Veröffentlichungstag der Patentschrift :
**31.03.93 Patentblatt 93/13**

(51) Int. Cl.$^5$ : **B27K 3/50**

(21) Anmeldenummer : **89810289.2**

(22) Anmeldetag : **17.04.89**

(54) **Holzschutzmittel gegen Schadinsektbefall.**

(30) Priorität : **26.05.88 CH 1988/88**

(43) Veröffentlichungstag der Anmeldung :
**13.12.89 Patentblatt 89/50**

(45) Bekanntmachung des Hinweises auf die
Patenterteilung :
**31.03.93 Patentblatt 93/13**

(84) Benannte Vertragsstaaten :
**AT BE CH DE ES FR GB IT LI NL**

(56) Entgegenhaltungen :
**EP-A- 0 218 024**
**DE-A- 3 130 675**
**HOLZ ALS ROH- UND WERKSTOFF, Band 43,**
**Nr. 8, August 1985, Seiten 339-343, Springer-**
**Verlag, Berlin, DE; W. LORENZ et al.: "Zum**
**Einsatz synthetischer Pyrethroide im vorbeu-**
**genden Holzschutz"**

(56) Entgegenhaltungen :
**CENTRAL PATENTS INDEX BASIC AB-**
**STRACTS JOURNAL, Woche 8445, 9. Januar**
**1985, Sektion C, Nr. 84-279253/45, Derwent**
**Publications Ltd, London, GB; & JP-A-84 172**
**405**
**JAPANESE PATENTS GAZETTE, Woche E32,**
**22. September 1982, Klasse C03, Nr. 66891,**
**Derwent Publications Ltd, London, GB; &**
**JP-A-82 106 603**
**CHEMICAL PATENTS INDEX BASIC AB-**
**STRACTS JOURNAL, Woche 8732, 7. Oktober**
**1987, Sektion C, Klasse C0060, Nr.**
**87-224755/32, Derwent Publications Ltd, Lon-**
**don, GB; & JP-A-87 149 383**

(73) Patentinhaber : **Olloz, Franz**
**Römerstrasse 48**
**CH-4147 Aesch BL (CH)**

(72) Erfinder : **Olloz, Franz**
**Römerstrasse 48**
**CH-4147 Aesch BL (CH)**

(74) Vertreter : **Hofmann, Rolf L.**
**Patmed AG Innere Margarethenstrasse 15**
**CH-4010 Basel (CH)**

EP 0 346 273 B1

**Beschreibung**

Die Erfindung betrifft ein Mittel auf der Grundlage von Pyrethrum und Piperonylbutoxid zum Schutz von Holz sowie dessen Verwendung zur Vorbeugung gegen und Bekämpfung von Schadinsektenbefall.

Insektizid wirksame, größtenteils jedoch synthetische und damit ökologisch bedenkliche Mittel zum Schutz von Holz gegen Schadinsektenbefall sind bekannt (Institut für Bautechnik Berlin; Verzeichnis der Prüfzeichen für Holzschutzmittel, Erich Schmidt Vlg, Berlin 1976).

Pyrethrum, ein natürlicher Extrakt aus Chrypsanthemumarten mit guten insektiziden Eigenschaften und geringer Warmblütertoxizität (The Pyrethroid Insecticides, London: Taylor & Francis 1985) wird wegen seiner geringen Licht- und Luftbeständigkeit im Holzschutz praktisch nicht eingesetzt. Überdies wird in "Holz als Roh- und Werkstoff" 43 (1985), 5.339-343, Springer-Verlag Berlin, berichtet, daß Pyrethrum unter applikationsnahen Bedingungen instabil ist, da es schon innerhalb von 10 Tagen abgebaut wird. Es besteht daher ein Bedarf nach einer anwendungsstabilen Pyrethrumformulierung, die die beschriebenen Nachteile vermeidet.

Weiterhin strebt man aus ökonomischen und ökologischen Gründen sowie zur Verminderung der Resistenzbildung in der Schädlingsbekämpfung den Einsatz möglichst geringer Wirkstoffkonzentrationen an. Die Aufwandmengen an Wirkstoff können jedoch nicht in beliebiger Weise herabgesetzt werden, da ab einer bestimmten Aufwandmengenuntergrenze das gewünschte Schutzergebnis nicht mehr erreicht wird. Mit dem Ziel der Erhöhung der arthropodiziden Wirkung werden daher den pyrethrumhaltigen Wirkstofformulierungen synergistisch wirkende Stoffe zugesetzt. Synergistische Mischungen von Pyrethrum z.B. mit bestimmten Methylendioxyphenylderivaten wie Piperonylbutoxid als Synergisten sind bereits bekannt (vgl. z.B. K. Naumann, Chemie der Pflanzenschutz- und Schädligungshekämpfungsmittel, Springer-Verlag Berlin, Band 7 (1981), Seiten 3-6). Unter den Bedingungen der praktischen Anwendung ist die Wirksamkeit solcher Präparate jedoch nicht immer voll befriedigend.

Der vorliegenden Erfindung lag daher die Aufgabe zugrunde, ein ökologisch unbedenkliches, gegen Licht- und Lufteinwirkung beständiges Mittel auf der Grundlage von Pyrethrum und Piperonylbutoxid bereitzustellen, welches bei geringen Aufwandmengen eine wirksame Bekämpfung des Schadinsektenbefalls bei Holz erlaubt.

Es wurde nun überraschend gefunden, daß sich Mittel auf der Basis von Pyrethrum und Piperonylbutoxid mit einem Gehalt an natürlichem oder synthetischem Harz oder Öl in hervorragender Weise zum Schutz von Holz gegen Schadinsektenbefall' eignen, wobei die Öle und Harze selbst keine signifikante insektizide Wirkung besitzen.

Gegenstand der Erfindung sind daher Mittel zum Schutz von Holz gegen Schadinsektenbefall auf der Grundlage von Pyrethrum und Piperonylbutoxid sowie bekannten Hilfsstoffen, mit einem Gehalt an natürlichem Harz und/oder Öl und/oder synthetischem Harz gemäß den Patentansprüchen 1 bis 4, sowie die Verwendung dieser Mittel gemäß den Patentansprüchen 5 bis 9, wie auch das verfahren zur Bekämpfung von Schadinsekten in Holz, gemäß den Patentansprüchen 10 und 11. Unter Pyrethrum sind sowohl aufgereinigte Präparationen (Pyrethrum Pale) als auch Rohprodukte (Pyrethrum Olioresin) zu verstehen.

Für den Einsatz in den erfindungsgemäßen Mitteln geeignete natürliche Harze stellen beispielsweise Balsame (z.B. Kiefernbalsam, Terpentin, Styrax, Tolnbalsam, rezente Harze), Hartharze (z.B. Kolophorium, Benzoe, Guajak) oder tierische Harze (z.B. Schellack) dar. Als synthetische Harze sind beispielsweise Kohlenwasserstoff-, Terpen-, Acrylat- und Petroleumharze zu nennen. Erfindungsgemäß verwendbare Öle entstammen beispielsweise der Gruppe der halhtrocknenden (z.B. Rüböl, Maisöl) und trocknenden Öle (z.B. Leinöl, Holzöl, Hanföl, Tallöl).

Zur Viskositätserniedrigung und damit zur besseren Verarbeitbarkeit und Erzielung größerer Eindringtiefe in das zu schützende Holzmaterial können die erfindungsgemäßen Mittel inerte Verdünnungsmittel enthälten. Beispiele hierfür sind Etheralkohole, Aliphaten, Alkohole, Aromaten, chlorierte Kohlenwasserstoffe , Ester, Hydroaromaten, Ketone und Weißöle, wobei hydriertes Mineralöl ein bevorzugtes Verdünnungsmittel darstellt.

Weitere bekannte Hilfsstoffe sind oberflächenaktive Stoffe (z.B. anionaktive, kationaktive, nichtionogene und amphotene Tenside), Geruchsstoffe und Farbstoffe.

Trotz der überraschend guten Licht- und Luftbeständigkeit der erfindungsgemäßen Mittel kann in einzelnen Fällen extremer Exposition der Zusatz von Antioxidantien und/oder UV-Filtern und UV-Stabilisatoren angezeigt sein. Solche thermischen Inhibitoren und Antioxidantien, wie beispielsweise Hydrochinon oder Hydrochinonderivate, Pyrogattol, Thiophenol oder β-Naphtole können in üblichen Mengen zugesetzt werden, ohne daß dadurch die arthropodizide Wirkung der erfindungsgemäßen Mittel beeinträchtigt wird.

Der Zusatz von Lichtstabilisatoren, wie beipielsweise Benzophenonderivaten, Benztriazolderivaten, Tetraalhylpiperidinen oder Phenylsalicylaten stellt eine bevorzugte Ausführungsform der vorliegenden Erfindung dar.

Zur Herstellung der erfindungsgemäßen Mittel werden die Komponenten durch einfaches Lösen und Einrühren miteinander vermischt.

Ein weiterer Gegenstand der Erfindung ist die Verwendung dieser Mittel zum Schutz von Holz gegen Schadinsektenbefall sowie in diesem Zusammenhang durchgeführte Verfahren.

Die erfindungsgemäßen Mittel sind gleichermaßen zum vorbeugenden und bekämpfenden Holzschutz geeignet. Vorbeugende Maßnahmen dienen dem Schutz des gesunden Holzes vor einem möglichen Schaden durch holzzerstörende Insekten, wobei auch ein temporärer Schutz frisch gefällter Rundhölzer (Tropen) gegen Insekten bis zur Weiterverarbeitung verstanden werden soll. Vorzugsweise werden die erfindungsgemäßen Mittel jedoch zum Schutz vor Trockenholzinsekten verwendet. Bekämpfende Maßnahmen gegen Schadinsektenbefall werden überwiegend bei bereits verbautem Holz durchgeführt.

Jegliche schädlichen Arthopoden können mit den erfindungsgemäßen Mitteln bekämpft werden, insbesodere eignen sie sich jedoch zur Bekämpfung von Vertreten der Gattungen Anobiidae (z.B. Anobium, Ptilinus), Lyctidae (z.B. Lyctus, Minthea) und Bostrychida (z.B. Bostrychus, Heterobostrychus). Eine besonders bevorzugte Verwendung der erfindungsgemäßen Mittel besteht in der Vorbeugung gegen und Bekämpfung von Hausbockschäden (Hylotrupes bajulus L.).

Die erfindungsgemäßen Mittel können nach einer Vielzahl von Verfahren in die Holzwerkstoffe eingebracht werden. Aufgrund von Druckdifferenzen (kapillare Zugkräfte) dringen die Schutzlösungen in das Holz ein, wobei das zu schützende Material noch zusätzlich mit Unter- und/oder Überdruck beaufschlagt werden kann.

Vorbeugende Holzschutzmaßnahmen erfolgen durch Streichen oder Tauchen. Bei bekämpfenden Maßnahmen kann das Schutzmittel durch Streichen, Spritzen oder Injektionen auf das oder/und in das Holz appliziert werden. Die erfindungsgemäßen Mittel gestatten jedoch unabhängig vom Applikationsverfahren eine vorbeugende und bekämpfende Behandlung gegen Schadinsekten bei geringen Aufwandmengen (üblicherweise 50-500 g/m²; vorzugsweise 100-250 g/m²) und lang anhaltender Schutzwirkung. Nachfolgendes Beispiel dient zur Erläuterung der Erfindung.

Beispiel

Vorbeugende Wirkung gegenüber Eilarven von Hylotrupes bajulus L. Die Prüfung der vorbeugenden Wirkung der erfindungsgemäßen Holzschutzmittel erfolgte nach der europäischen Prüfnorm EN 46 (1977). Hierzu wurde Kiefernsplintholz (Pinus silvestris L. ) durch Tauchen mit dem jeweiligen Schutzmittel imprägniert und hernach der der Prüfnorm entsprechenden Trocknung und Altersbeanspruchung unterzogen.

Als Vergleichsbeipiel A wurde die Zusammensetzung

```
0,7   %   Pyrethrum   Pale       25%   w/w
0,7   %   Pyrethrum   Olioresin  25%   w/w
2,0   %   Piperonylbutoxid

          4,0    %   Leinöl roh
          20,0   %   Balsamterpentinöl
          72,6   %   Terpentinöl
```

gewählt, als erfindungsgemäßes Beispiel B gelangte die Zusammensetzung

```
1,40   Gew. %   Pyrethrum Pale  25%   w/w
2,60   Gew. %   Piperonylbutoxid
25.00  Gew. %   Naturlack
71.00  Gew. %   Mineralöl hydriert (Exsol Ⓡ 40)
```

Zur Anwendung:

Aus den Mortalitätsraten (Vergleichsmittel A: 83,5% (100 g/m² Aufwandsmenge) bzw. 98,2 % (200 g/m²)

3

gegenüber 100% (150 g/m²) beim erfindungsgemäßen Mittel B) ist die erheblich verbesserte Schutzwirkung der erfindungsgemäßen mittel gegenüber dem Stand der Technik.

Tabelle 1 : Vorbeugende Wirkung frisch geschlüpfter Eilarven des Hausbockes, Hylotrupes bajulus L.

Schutzmittel : Vergleichsmischung A

| Prüfung | Schutzmittel-Dosis je Holzprobe | Schutzmittel-Dosis je Fläche | Wiedergefundene Larven tot nicht eingebohrt | Wiedergefundene Larven tot eingebohrt | Wiedergefundene Larven lebend | nicht wieder gefundene Larven | Mortalität nicht korrigiert | Mortalität korrigiert nach Abbot 1 |
|---|---|---|---|---|---|---|---|---|
| Angabe | g | g/m² | absolut | absolut | absolut | absolut | % | % |
| Frass-kontr. | - | - | 0 | 0 | 10 | 0 | 0 | 0 |
| | | | 0 | 1 | 9 | 0 | 10 | |
| | | | 0 | 0 | 10 | 0 | 0 | |
| Schutz-mittel A | 0,361 | 100,06 | 7 | 2 | 1 | 0 | 90 | 81,0 |
| | 0,365 | 100,08 | 7 | 2 | 1 | 0 | 90 | |
| | 0,386 | 100,00 | 7 | 2 | 1 | 0 | 90 | |
| | 0,378 | 99,95 | 6 | 2 | 1 | 0 | 80 | |
| | 0,374 | 100,21 | 6 | 3 | 1 | 0 | 90 | |
| | 0,374 | 100,00 | 3 | 2 | 5 | 0 | 50 | |
| Schutz-mittel A | 0,720 | 200,06 | 8 | 2 | 0 | 0 | 100 | 98,3 |
| | 0,745 | 200,05 | 10 | 0 | 0 | 0 | 100 | |
| | 0,749 | 200,05 | 10 | 0 | 0 | 0 | 100 | |
| | 0,772 | 199,95 | 9 | 0 | 1 | 0 | 90 | |
| | 0,751 | 200,16 | 9 | 1 | 0 | 0 | 100 | |
| | 0,767 | 200,21 | 10 | 0 | 0 | 0 | 100 | |

1) Abbot: Korrektur der Mortalitätsdaten mit der Mortalität in der Frasskontrolle.

EP 0 346 273 B1

Tabelle 2: Vorbeugende Wirkung gegen frisch geschlüpfte Eilarven des Hausbockes, _Hylotrupes bajulus_ L.
Schutzmittel: Mischung B

| Prüfung | Schutzmittel-Dosis | | Wiedergefundene Larven | | | nicht wieder gefundene Larven | Mortalität | |
|---|---|---|---|---|---|---|---|---|
| | je Holz-probe | je Fläche | tot | | lebend | | nicht korrigiert | Mittelwert (korrigiert) [1] |
| | | | nicht einge-bohrt | einge-bohrt | | | | |
| Angabe | g | g/m$^2$ | absolut | absolut | absolut | absolut | % | % |
| Frasskon-kontrolle | -<br>-<br>- | -<br>-<br>- | 0<br>0<br>0 | 0<br>0<br>0 | 10<br>10<br>10 | 0<br>0<br>0 | 0<br>0<br>0 | 0 |
| Schutz-mittel B | 0,591<br>0.585<br>0.571<br>0.577<br>0.583<br>0.579 | 150,08<br>150.27<br>149.87<br>149.79<br>150.14<br>150.12 | 10<br>10<br>10<br>10<br>10<br>10 | 0<br>0<br>0<br>0<br>0<br>0 | 0<br>0<br>0<br>0<br>0<br>0 | 0<br>0<br>0<br>0<br>0<br>0 | 100<br>100<br>100<br>100<br>100<br>100 | 100 |

[1] Abbot: Korrektur der Mortalitätsdaten mit der Mortalität in der Frasskontrolle

EP 0 346 273 B1

**Patentansprüche**

1. Mittel zum Schutz von Holz gegen Schadinsektenbefall auf der Grundlage von Pyrethrum und Piperonylbutoxid sowie bekannten Hilfsstoffen, gekennzeichnet durch einen Gehalt an natürlichem Harz und/oder Öl und/oder synthetischem Harz, mit einem Gesamtanteil an Harz und/oder Öl von mindestens 10 Gewichtsprozent, höchstens jedoch 40 Gewichteprozent, und einem Gewichtsverhältnis von Piperonylbutoxid und Pyrethrum von mindestens 7:1 und höchstens 10:1

2. Mittel nach Anspruch 2, dadurch gekennzeichnet, daß Pyrethrum aus Pyrethrum Pale oder Pyrethrum Olioresin oder deren Gemischen besteht.

3. Mittel nach einem der Ansprüche 1 bis 2, dadurch gekennzeichnet, daß als Hilfsstoff ein hydriertes Mineralöl eingesetzt wird.

4. Mittel nach einem der Ansprüche 1 bis 3, dadurch gekennzeichnet, daß als Hilfsstoff ein UV-Filter oder UV-Stabilisator eingesetzt wird.

5. Verfahren zur Herstellung eines Mittels nach einem der Ansprüche 1 bis 4, dadurch gekennzeichnet, daß man wenigstens ein natürliches Harz und/oder Öl und/oder ein synthetisches Harz mit Pyrethrum und Piperonylbutoxid und gegebenenfalls bekannten Hilfstoffen und Lösemitteln vermischt.

6. Verwendung eines Mittels nach einem der Ansprüche 1 bis 4 zum Schutz von Holz gegen Schadinsektbefall.

7. Verwendung eines Mittels nach einem der Ansprüche 1 bis 4 gemäß Anspruch 6, dadurch gekennzeichnet, daß es sieh bei den Schadinsekten um Trockenholzinsekten handelt.

8. Verwendung eines Mittels nach einem der Ansprüche 1 bis 4 gemäß Anspruch 6 oder 7 gegen Insekten der Gattungen Anobiidae, Lyctidae und Bostrychidae.

9. Verwendung eines Mittels nach einem der Ansprüche 1 bis 4 gemäß Anspruch 6 oder 7 zur Bekämpfung des Hausbockes (Hylotrupes bajulus L.)

10. Verfahren zur Bekämpfung von Schadinsekten in Holz, dadurch gekennzeichnet, daß man ein Mittel gemäß den Ansprüchen 1 bis 4 auf die Schädlinge und/oder ihren Lebensraum einwirken läßt.

11. Verfahren nach Anspruch 10, dadurch gekennzeichnet, daß es sich bei den zu bekämpfenden Schadinsekten um den Hausback (Hylotrupes bajulus L.) handelt.


**Claims**

1. Agent for protecting wood against insect attack, based on pyrethrum and piperonyl butoxide together with known adjuvants, characterized by containing a natural resin and/or oil and/or synthetic resin content, the total resin and/or oil content being at least 10% by weight, at the most however 40% by weight, a weight ratio of piperonyl butoxide and pyrethrum of at least 7:1 and at the most 10:1.

2. Agent according to claim 1, characterized in that the pyrethrum consists of pyrethrum pale or pyrethrum olio-resin and mixtures thereof.

3. Agent according to one of claims 1 or 2, characterized in that a hydrated mineral oil is employed as said adjuvant.

4. Agent according to one of claims 1 to 3, characterized in that a UV filter or UV stabilizer is employed as said adjuvant.

5. A process for producing an agent according to one of claims 1 to 4, characterized in that it comprises mixing at least one natural resin and/or oil and/or a synthetic resin with pyrethrum and piperonyl butoxide and optionally known adjuvants and solvents.

6

6. Use of an agent according to one of claims 1 to 4 for protecting wood against insect attack.

7. Use according to claim 6 of an agent according to one of claims 1 to 4, characterized in that said insects are dry wood insects.

8. Use according to claim 6 or 7 of an agent according to one of claims 1 to 4, against insects of the Anobiidae, Lyctidae and Bostrychidae species.

9. Use according to claim 6 or 7 of an agent according to one of claims 1 to 4, against longicorn varieties of house beetle (hylotrupes bajulus L.).

10. A method for combating insect attack in wood, characterized in that it comprises subjecting the insects and/or their habitat to an agent according to claims 1 to 4.

11. Method according to claim 10, characterized in that said insects to be combated comprise longicorn varieties of house beetle (hylotrupes bajulus L.)


**Revendications**

1. Agent protecteur du bois contre l'attaque par des insectes à base de pyrethrum et le butoxyde de pipéronyle ainsi que des adjuvants connus, caractérisé par une teneur en résine naturelle et/ou huile et/ou résine synthétique, la teneur totale en résine et/ou huile étant d'au moins 10% en poids, d'un maximum cependant de 40% en poids, et un rapport pondéral de butoxyde de pipéronyle et de pyrètre d'au moins 7/1 et un maximum de 10/1.

2. Agent selon la revendication 1, caractérisé en ce que le pyrethrum comprend le pyrethrum purifié ou le pyrethrum but ou des mélanges de ceux-ci.

3. Agent selon l'une des revendications 1 à 2, caractérisé en ce qu'une huile minérale hydratée est utilisée comme adjuvant.

4. Agent selon l'une des revendications 1 à 3, caractérisé en ce qu'on utilise, comme adjuvant, un filtre UV ou un stabilisateur UV.

5. Procédé de fabrication d'un agent selon l'une des revendications 1 à 4, caractérisé en ce qu'on mélange au moins une résine naturelle et/ou huile et/ou résine synthétique avec du pyrethrum et du butoxyde de pipéronyle et, éventuellement, des adjuvants et solvants connus.

6. Utilisation d'un agent selon l'une des revendications 1 à 4, pour la protection du bois contre une attaque par des insectes.

7. Utilisation selon la revendication 6 d'un agent selon l'une des revendications 1 à 4, caractérisée en ce que les insectes sont des insectes qui attaquent du bois sec.

8. Utilisation selon la revendication 6 ou 7 d'un agent selon l'une des revendications 1 à 4, contre des insectes des espèces Anobiidae, Lyctidae et Bostrychidae.

9. Utilisation selon la revendication 6 ou 7 d'un agent selon l'une des revendications 1 à 4, pour combattre les longicornes (hylotrupes bajulus L.).

10. Méthode pour combattre des insectes qui attaquent le bois, caractérisée en ce qu'on laisse agir un agent selon les revendications 1 à 4, sur les insectes nuisibles et/ou leur habitat.

11. Méthode selon la revendication 10, caractérisée en ce que les insectes qu'il s'agit de combattre sont des longicornes (hylotrupes bajulus L.).